# EUROPEAN PATENT APPLICATION

(11) **EP 0 762 593 A2**
(43) Date of publication of application: **12.03.1997**
(21) Application number: 96305905.0
(22) Date of filing: 12.08.1996
(51) Int. Cl.: H02J 7/00

(54) **Battery management circuit and method for controlling the in-circuit charge and discharge of series-connected rechargeable electrochemical cells**

(30) Priority: 25.08.1995 US 519680
(71) Applicant: RAYOVAC CORPORATION, Madison, Wisconsin 53711-2497 (US)
(72) Inventor: Sengupta, Upal, Oregon, Wisconsin 53575 (US); Duerr, Michael L., Palatine, Illinois 60067 (US); Bredland, Alf M., Madison, Wisconsin 53711 (US); Messing, Terry G., Verona, Wisconsin 53711 (US)
(74) Representative: Allen, William Guy Fairfax

(57) **Abstract**

The invention is a battery management circuit and corresponding method for controlling the in-circuit charge and discharge of series-connected electrochemical cells. The invention finds particular application in the field of devices powered by rechargeable alkaline manganese dioxide cells, but also finds application in other types of chargers, devices and electrochemical cells or batteries. The battery management circuit of the invention monitors the voltage of individual series-connected cells that power a device. The circuit terminates discharge of all cells as soon as the voltage of one of the cells drops to a predetermined level. During in-circuit charging of the cells, the battery management circuit monitors the voltage of individual series-connected cells as they are being recharged, and terminates the provision of charging current to all cells as soon as one of the cells attains a sufficiently high predetermined voltage. Appropriate termination of the provision of charging current to the cells combined with the appropriate termination of the provision of discharging current from the cells, permits the cells to provide a maximum number of discharge/charge cycles. The invention permits rechargeable cells to provide greater cumulative coulometric capacity, and reduces the incidence of electrolyte leakage from rechargeable cells. The cells may be contained in a battery pack, or may be mounted directly in a device. Electronic circuitry and software programmable device embodiments of the invention are described.

## Description

This invention relates to battery management circuits and methods for controlling the in-circuit charge and discharge of series-connected rechargeable electrochemical cells.

Battery chargers for nickel cadmium batteries have been used for many years. In past, such chargers have been characterized generally in having relatively simple circuits for terminating the provision of charging current to a battery. In one such common circuit, as soon as a battery's voltage equaled or exceeded the voltage provided by a full wave bridge rectifier, the provision of charging current to the battery was terminated.

More sophisticated variants of this basic circuit were developed for nickel cadmium batteries, and more recently nickel metal hydride batteries. Numerous prior art disclosures have been made suggesting methods of charging, and determining the state of charge of, nickel cadmium, nickel metal hydride, and other types of batteries, including the following patents and patent applications:

| Country | Patent Number | Inventor/Assignee | Issue Date |
|---|---|---|---|
| U.S.A. | 3,593,100 | Foster | 1971 |
| U.S.A. | 3,700,997 | Smith | 1972 |
| U.S.A. | 3,786,343 | Ehlers | 1974 |
| U.S.A. | 3,872,457 | Ray, et al. | 1975 |
| U.S.A. | 3,944,904 | Hase | 1975 |
| U.S.A. | 4,016,473 | Newman | 1977 |
| U.S.A. | 4,053,824 | Dupuis, et al. | 1977 |
| U.S.A. | 4,118,661 | Siekierski, et al. | 1978 |
| U.S.A. | 4,237,411 | Kothe, et al. | 1980 |
| U.S.A. | 4,554,500 | Sokira | 1985 |
| U.S.A. | 4,679,000 | Clark | 1987 |
| U.S.A. | 4,746,852 | Martin | 1988 |
| U.S.A. | 4,912,392 | Faulkner | 1990 |
| U.S.A. | 5,166,595 | Leverich | 1993 |
| U.S.A. | 5,206,578 | Nor | 1993 |
| U.S.A. | 5,248,928 | Gilmore | 1993 |
| U.S.A. | 5,397,974 | Tamai | 1995 |
| U.S.A. | 5,422,558 | Stewart | 1995 |
| U.S.A. | 5,422,559 | Hall, et al. | 1995 |
| U.S.A. | 5,422,560 | Yan | 1995 |
| U.S.A. | 5,422,562 | Mammano, et al. | 1995 |
| Germany | DE4429101 | Sanyo | 1995 |
| E.P.O. | EP 643310-A1 | Renault | 1995 |

In some prior art circuits, the state of charge of a battery was determined by monitoring changes in battery voltage or temperature, or by measuring the average value of charge current provided to the battery. Yet other prior art circuits terminated battery charging when a certain predetermined amount of time had passed, or when a certain number of current pulses provided to the charging battery had been missed over a predetermined period of time.

Many prior art battery charging circuits provided constant current to the nickel cadmium or nickel metal hydride batteries being charged, and monitored battery voltage continuously to determine when to terminate charge. Nickel cadmium and nickel metal hydride batteries have relatively low internal impedances, usually on the order of about 50 milliohms. Thus, open-circuit voltages (OCVs) and closed-circuit voltages (CCVs) measured in those types of batteries do not differ significantly. As such a nickel-cadmium or nickel metal hydride battery nears the end of the charge cycle, voltage typically rises, levels off, and finally decreases. This decrease in battery voltage during the charge cycle is often used to terminate the charge cycle.

Other prior art battery charging circuits provided constant current to the nickel cadmium or nickel metal hydride batteries being charged, and continuously monitored battery temperature to determine when to terminate charge. As nickel cadmium and nickel metal hydride batteries near the end of their charge cycle, battery temperature suddenly increases. This increase in battery temperature was often used to terminate the charge cycle.

Still other prior art charging circuits continuously measured the average amount of charging current provided to a battery, and terminated charging when the average amount of current fell below a certain minimum value.

Most prior art circuits for charging or determining the state of charge of nickel cadmium or nickel metal hydride batteries were relatively inexpensive and easy to design owing to the ease with which relevant battery parameters (such as cell temperature or CCV) could be measured.

Descriptions of prior art battery charging methods and corresponding circuits developed for nickel cadmium and nickel metal hydride cells are set forth in Sections 3.2 and 4.2 of the Gates Energy Products Application Manual (Preliminary) entitled "Sealed Rechargeable Batteries," the handbook entitled "Ni-MH Rechargeable Batteries" published in 1992 by Toshiba Battery Co., Ltd. in Japan, and in course materials written by Dr. El-Sayed Megahed et al., and published in 1994 by the College of Engineering at the University of Wisconsin Madison entitled "Battery Charging and Control Methods."

None of the circuits or methods described in the foregoing references, however, found ready application to the problem of charging, and indicating the state of charge of, rechargeable alkaline manganese dioxide batteries. The behavior of rechargeable alkaline manganese dioxide cells differs significantly from that observed in rechargeable nickel cadmium or nickel metal hydride batteries. See, for example, the discussion in the OEM designer's guide entitled "The New Power - RENEWAL® Reusable Alkaline™ Batteries," published by Rayovac Corporation in 1994.

Rechargeable alkaline batteries have an internal impedance as high as 5 ohms, which is much higher than the internal impedance characteristic of nickel cadmium or nickel metal hydride batteries. The relatively high internal impedance of rechargeable alkaline batteries presented significant problems respecting the accurate measurement of battery voltage. As a result, the OCV of rechargeable alkaline batteries was typically measured between charging pulses for an accurate indication of the battery's state of charge. See, for example, U.S. Patent No. 4,977,364 to Kordesch et al., the disclosure of which is hereby incorporated by reference in its entirety, wherein the technique of "IR-free" charging of rechargeable alkaline manganese dioxide batteries is described. In nickel cadmium and nickel metal hydride batteries, conversely, state of charge may be determined accurately using a CCV measurement obtained during charging.

In rechargeable alkaline batteries, battery voltage was discovered to increase rapidly during the start of the charge cycle, but to reach a plateau and remain essentially constant for the remainder of the charge cycle. The constant voltage portion of the charge cycle was found to correspond to a state of charge anywhere between about 50% and about 100% of full capacity. Thus, in a rechargeable alkaline cell, the state of charge of the cell could not be determined accurately by merely measuring its CCV or OCV. One of ordinary skill in the art will therefore appreciate that rechargeable alkaline batteries cannot be charged safely and reliably in prior art battery chargers designed for nickel cadmium or nickel metal hydride batteries.

One means of solving some of the unique problems presented by rechargeable alkaline batteries is described in U.S. Patent No. 5,376,875, where Yee et al. employ logic circuitry to count charge and clock pulses. A state of full charge of a cell is indicated by measuring the time between current pulses, and determining that a full state of charge has been attained in the cell when the measured time exceeds a threshold value.

Series-connected electrochemical cells are typically used to power electrical or electronic devices, where two or more cells are connected electrically in series to obtain the voltage level required to operate the device. Because of the convenience, lower operating cost, and environmental benefits inuring to secondary cells, many devices requiring series-connected electrochemical cells are powered by secondary (or rechargeable) cells, as opposed to primary (or non-rechargeable) cells.

Secondary cells in devices powered by series-connected electrochemical cells are generally recharged using one of two different approaches. In the first approach, the user removed the secondary cells from the device (since the device is not designed to recharge secondary cells), and recharges them in a separate, dedicated battery charging device. In the second approach, the secondary cells are recharged in the device by means of a battery recharging circuit integral to the device; the battery recharging circuit receives power to recharge the cells from an external power source such as household AC or an external battery. The second approach is commonly referred to as "in-circuit charging" because the series electrical connections between cells are not disturbed - the cells remain intact in the device, and the user is not required to remove or otherwise physically handle the cells during the recharging process. The second "in-circuit charging" approach is generally preferred over the first approach because repeated removal of cells from a device is inconvenient to users, and additionally can cause battery contacts or battery latch covers in the device to become fatigued, worn or fail mechanically.

Some battery-powered devices employ a power management circuit to monitor the state of charge of a battery pack integral to the device. Such a battery pack usually contains a plurality of series-connected secondary cells. The battery pack may or may not be removable from the device. The power management circuit monitors the state of charge of the secondary cells contained in the battery pack, and may also control charge and discharge of the battery pack. The combination of appropriate monitoring of battery pack state of charge and careful control over how the battery pack is charged and discharged can extend battery pack service life.

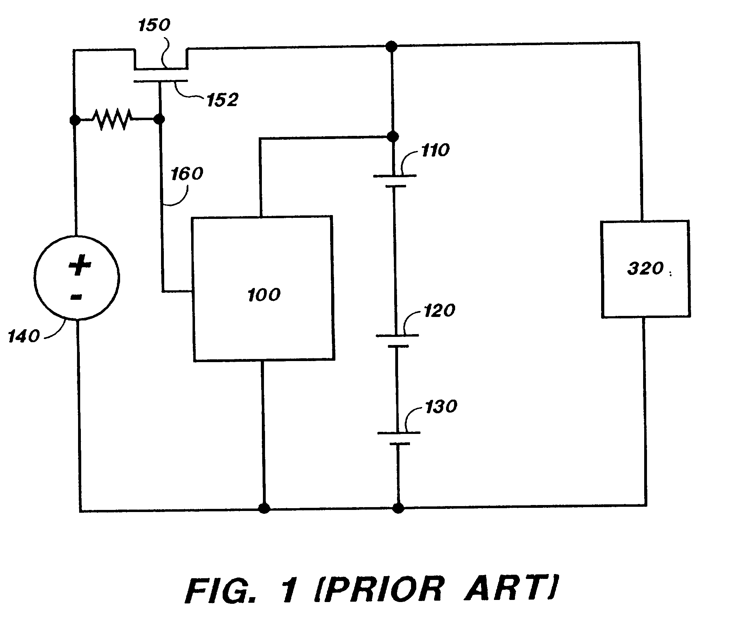

Figure 1 shows a block diagram of a conventional prior art battery charge control system for series-connected secondary cells contained in a battery pack. Battery pack monitoring circuit 100 monitors the total voltage across three series-connected secondary cells 110, 120 and 130. Power source 140 provides charging current to secondary cells 110, 120 and 130 so long as input power switch 150 receives a charge control enable signal through gate or base 152 from battery pack monitoring circuit 100 via electrical connection 160. Typically, input power switch 150 is disabled when an appropriate control signal is provided to base or gate 152, and stops providing charging current to cells 110, 120 and 130 when battery pack monitoring circuit 100 senses that the voltage or temperature across all three cells meets or exceeds a predetermined maximum threshold voltage or temperature. Additionally, discharge of cells 110, 120 and 130 across load 320 may be terminated by battery pack monitoring circuit 100 when circuit 100 senses that the voltage or temperature across all three cells meets or is less than a predetermined minimum threshold voltage or temperature.

The circuit shown in Figure 1 is illustrative of most conventional in-circuit power management circuits, which monitor only the summed, averaged or overall voltages, currents, or temperatures of series-connected cells in a battery pack. Those circuits typically do not monitor the individual voltages, currents, or temperatures of each cell in the battery pack. Because all cells in a battery pack are rarely perfectly matched to one another for internal impedance and other physical characteristics, it is relatively easy for individual cells in a battery pack to be overcharged or over-discharged when summed, averaged, or overall physical characteristics of a battery pack are monitored by the power management circuit. That is, some cells in the battery pack may become fully charged or fully discharged prior to other cells in the battery pack attaining the same state of charge.

One general type of prior art circuit addresses some of the problems presented by variations in the characteristics of individual cells: the "shuntregulated series charging circuit." See, for example, the article "Extension of Battery Life via Charge Equalization Control" by Hung et al. in IEEE Transactions on Industrial Electronics, v. 40, no. 1, February, 1993.

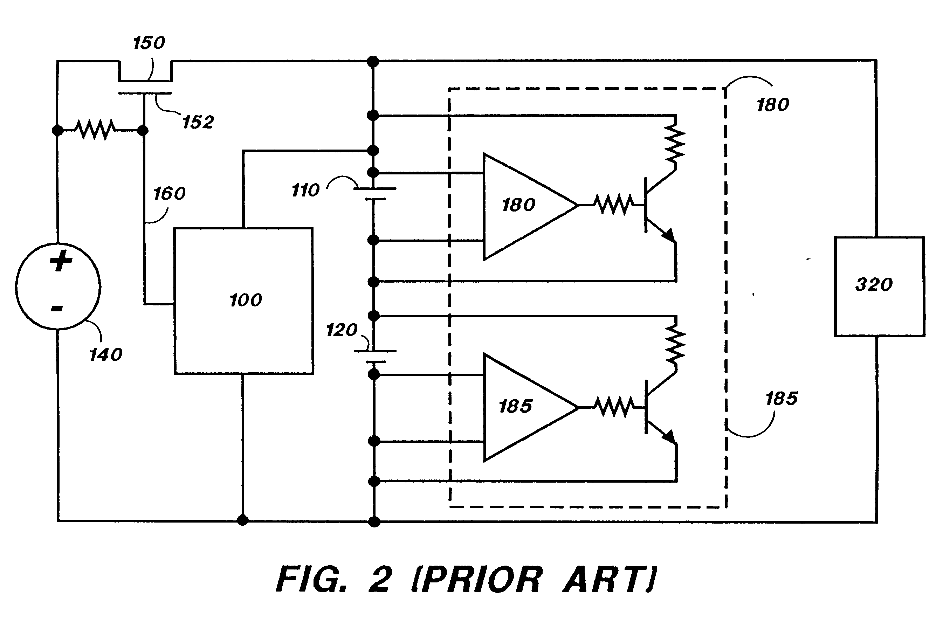

Figure 2 shows a simplified circuit diagram of a shunt-regulated series charging circuit. Battery pack monitoring circuit 100 monitors the total voltage across two series-connected secondary cells 110 and 120. Power source 140 provides charging current to secondary cells 110 and 120 so long as input power switch 150 receives a charge control enable signal at base or gate 152 from battery pack monitoring circuit 100 via electrical connection 160. Typically, input power switch 150 is disabled when an appropriate control signal is provided to gate or 152, and stops providing charging current to cells, 110 and 120 when battery pack monitoring circuit 100 senses that the voltage or temperature across cells 110 and 120 meets or exceeds a predetermined maximum threshold voltage or temperature.

Dissipative voltage regulators 180 and 185, placed across cells 110 and 120, respectively, clamp the voltage of each cell to a predetermined maximum value during charging. If during charging cell 110 is the first cell to attain a voltage corresponding to the predetermined maximum value, cell 120 will continue to receive charging current until it also reaches a voltage corresponding to the predetermined maximum value. Battery pack monitoring circuit 100 terminates discharge of cells 110 and 120 across load 320 when circuit 100 senses that the voltage or temperature across cells 110 and 120 meets or is less than a predetermined minimum threshold voltage or temperature.

The foregoing description shows that the shunt-regulated series charging circuit requires regulating and power dissipating circuitry to balance cell charge and voltage levels. Regulating circuitry can add significant cost to a circuit. Because regulating circuitry also dissipates power, it decreases the energy efficiency of the circuit.

This invention is a battery management circuit and corresponding method for controlling the in-circuit charge and discharge of series-connected electrochemical cells. Successful practice of the invention generally requires that the processes of discharging and subsequently recharging the cells be appropriately controlled during each discharge/charge cycle, and that the two processes not be separated from one another. Accordingly, one key aspect of the invention resides in the combination of appropriate charge and discharge processes and circuitry.

There are two basic embodiments of the invention. In a first embodiment the invention is implemented using electronic circuitry. In a second embodiment the invention is implemented using electronic interface circuitry in combination with a microprocessor, digital signal processor, or other software programmable device.

The battery management circuit and method of the invention have certain objects. That is, the invention provides solutions to problems existing in the prior art. For example, the invention provides a circuit and method for in-circuit charging and discharging of series-connected rechargeable cells that: (a) permits safe and effective in-circuit charging of series-connected cells; (b) contains fewer power electronic components (and is therefore less expensive) than prior art chargers; (c) prevents or minimizes cell divergence during discharge; (d) prevents or minimizes the occurrence of cell reversal during discharge; (e) extends the cumulative charge capacity that may be withdrawn from the cells; (f) is easy to implement, and (g) measures the CCV or OCV across each cell to determine whether and when to terminate charge or discharge.

The first embodiment of the invention is an electronic circuit version of the invention, and has three preferred features: (a) a differential cell voltage monitoring circuit; (b) a charge control circuit, and (c) a discharge control circuit. A fourth preferred feature may optionally be included in the first embodiment of the invention: (d) an OCV cell monitoring network.

In the first preferred feature of the first embodiment of the invention, a differential cell voltage monitoring circuit generally comprises a differential amplifier circuit for each cell in the battery management circuit. Each amplifier circuit has two inputs corresponding to the positive and negative terminals of a rechargeable electrochemical cell, and provides a first output signal corresponding to the OCV or CCV of that cell. Typically, each differential amplifier circuit comprises an operational amplifier and associated resistors. Other circuits performing the same function, but having different components or equivalent structures than an operational amplifier and associated resistors and capacitors fall within the scope of the present invention.

In the second preferred feature of the first embodiment of the invention, a charge control circuit comprises a charge monitoring circuit for each cell in the battery management circuit. Each charge monitoring circuit receives two inputs corresponding to the OCV of a single cell and a charge limit reference voltage. The output of each charge control circuit changes when the OCV of the cell to which it corresponds attains a voltage corresponding to a full or high state of charge (the charge limit reference voltage). Such a change in output terminates charging of all cells contained in the battery management circuit. Typically, each charge monitoring circuit comprises a comparator, a means for providing a charge limit reference voltage, and associated resistors. Other circuits performing the same function, but having different components or equivalent structures fall within the scope of the present invention.

In the third preferred feature of the first embodiment of the invention, a discharge control circuit comprises a discharge monitoring circuit for at least one of the cells in the battery management circuit. Each discharge monitoring circuit receives two inputs corresponding to the CCV of a cell and a discharge limit reference voltage. The output of each discharge control circuit changes when the CCV of the cell to which it corresponds attains a voltage corresponding to an empty or low state of charge (the discharge limit reference voltage). Such a change in output terminates discharging of all cells contained in battery management circuit. Typically, each discharge monitoring circuit comprises a comparator, a means for providing a discharge limit reference voltage, and associated resistors. Other circuits performing the same function, but having different components or equivalent structures, likewise fall within the scope of the present invention.

In the fourth preferred feature of the first embodiment of the invention, an OCV monitoring circuit is interposed between the differential cell voltage monitoring circuit and the charge control circuit. The OCV monitoring circuit comprises an OCV-sensing network for each cell in the battery management circuit. Each OCV-sensing network receives input signals from (a) a differential amplifier circuit; and (b) a clock or oscillator. The OCV of the cell corresponding to the OCV-sensing network is provided as an input signal to a charge control circuit. Typically, each OCV sensing network comprises a transistor, a voltage divider network, and a current limiting output resistor. Other circuits performing the same function but having different components or equivalent structures, however, fall within the scope of the present invention.

The second embodiment of the invention is a software programmable device version of the invention, and has first and second preferred features: (a) a microprocessor, and (b) electronic interface circuitry. Optionally, the second embodiment of the invention has a third preferred feature: a voltage regulator. In the second embodiment of the invention, the microprocessor senses the OCV of each cell during charging, and the CCV of each cell during discharge. The microprocessor compares the sensed OCVs and CCVs to predetermined reference values stored in its memory, and terminates charge or discharge of the cells as required.

The invention provides certain advantages, including increased safety as a result of decreased electrolyte leakage, an increased number of battery discharge/charge cycles, fewer battery failures due to reversal, the simplicity of the circuit's design, the decreased cost of the components required to make the circuit, and the small number of modifications required to implement the invention in known in-circuit charging and discharging circuits. Other objects, features, and advantages of the invention will become apparent from the detailed description of the invention.

The accompanying drawings describe details of the invention, where:
Figure 1 shows an illustrative block diagram of a conventional prior art battery discharge and charge control system;
Figure 2 shows an illustrative block diagram of a prior art shunt-regulated battery discharge and charge control system;
Figure 3 illustrates the results of a first computer simulation of the charge response of two series-connected electrochemical cells, where the two cells have initially mismatched voltages;
Figure 4 illustrates the results of a second computer simulation of the discharge response of four series-connected rechargeable alkaline manganese dioxide cells, where one of the four cells has an initially mismatched voltage;
Figure 5 illustrates the results of a third computer simulation of the discharge response of two-series rechargeable alkaline manganese dioxide cells, where the two cells have initially matched voltages but initially mismatched total coulometric capacities;
Figure 6 shows a block diagram of a first embodiment of the battery management circuit of the present invention;
Figure 7 shows a preferred version of the first embodiment of the battery management circuit of the present invention;
Figure 8(a) shows discharge and charge voltage responses measured in four fresh rechargeable alkaline manganese dioxide cells over the first discharge/charge cycle;
Figure 8(b) shows the discharge and charge current response measured through a load for the four fresh rechargeable alkaline manganese dioxide cells of Figure 8(a);
Figure 9(a) shows discharge and charge voltage responses measured in the four rechargeable alkaline manganese dioxide cells of Figure 8(a) during the twentieth discharge/charge cycle;
Figure 9(b) shows the discharge and charge current response measured through a load for the four rechargeable alkaline manganese dioxide calls of Figure 9(a);
Figure 10 compares the relative capacity fades measured in four series connected rechargeable alkaline manganese dioxide cells versus a single rechargeable alkaline manganese dioxide cell;
Figure 11 shows a block diagram of a second embodiment of the battery management circuit of the present invention, and
Figure 12 shows a preferred version of the second embodiment of the battery management circuit of the present invention.

Throughout the drawings, like numbers refer to like parts. The terms "cell," "electrochemical cell," and "battery" are used interchangeably, and may refer to a dry cell, an electrochemical cell, a battery, or a plurality of electrochemical cells, dry cells, or batteries. The term "series-connected rechargeable electrochemical cells or batteries" may mean cells or batteries connected electrically in series, or connected electrically in series-parallel. The terms "termination of charge" and "terminating charge" may mean the temporary, instantaneous, or prolong ad termination of the provision of charging current to series-connected electrochemical cells. The terms "termination of charge" and "terminating charge" may also mean that charging current is supplied at a reduced rate, as opposed to a maximum or full rate of charge, to series-connected electrochemical cells. The phrase "providing charging current to the cells substantially uninterruptedly and continuously" means the uninterrupted and continuous provision of charging current to at least two electrochemical cells over a period of time which is much greater than the period of time required to sense the OCV of any one of those cells.

The internal impedance and other physical characteristics of electrochemical cells contained in a battery pack or device are rarely perfectly matched to one another. Referring to Figure 1, battery pack monitoring circuit 100 senses only an average voltage or temperature, and thus one or more of cells 110, 120 or 130 are likely to be overcharged or overdischarged. As the cells contained in battery packs are cycled through successively more discharge/charge cycles, it is generally observed that divergence between the physical characteristics of those cells typically increases. It was discovered that such divergence typically manifests itself through individual cells exhibiting different charge and discharge voltage or current profiles in respect of time.

One factor influencing the degree of divergence of cell physical characteristics is the electrochemistry of the cells in the battery pack. For example, secondary cells having nickel-cadmium or nickel metal hydride electrochemistries tolerate limited amounts of overcharge or overdischarge over many discharge/charge cycles without a significant degree of divergence occurring. It was discovered, however, that series-connected secondary cells having a rechargeable alkaline manganese dioxide or lithium-ion electrochemistry, wherein a limited amount of overcharge or overdischarge is permitted to occur, typically tolerate only a few discharge/charge cycles before the degree of cell divergence becomes significant.

One means of reducing cell divergence is to match cells placed in the same battery pack. The behavior of individual cells is monitored through several discharge/charge cycles, and the discharge/charge profiles of individual cells are used to match cells to one another. Matched cells are then placed in the same battery pack. While cell matching may result in a battery pack less likely to experience a significant degree of cell divergence, the process takes time and otherwise adds cost to manufacturing processes.

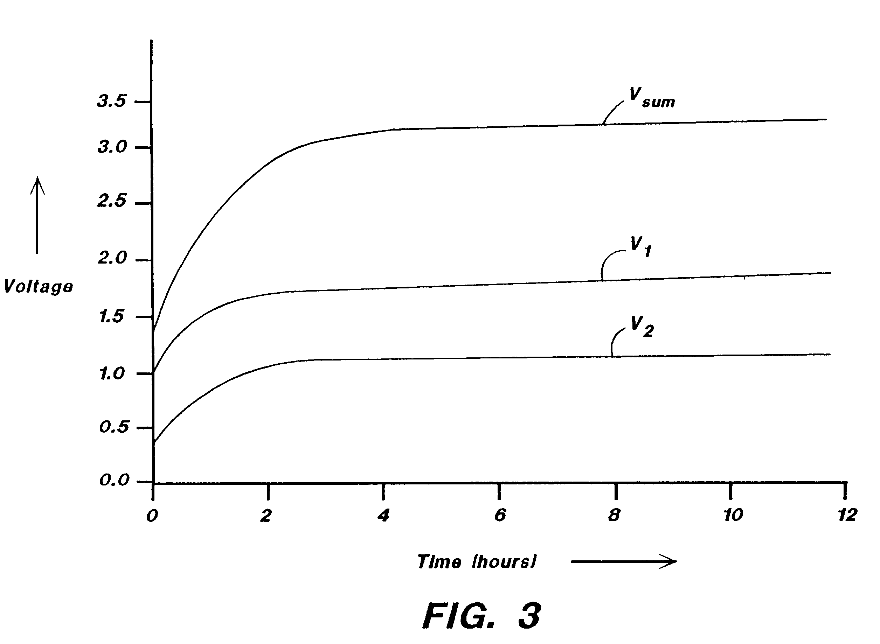

Figures 3-5 illustrate the effects of cell divergence as they apply to rechargeable alkaline manganese dioxide cells. A first computer simulation of the charge response of a battery pack containing two series-connected rechargeable alkaline manganese dioxide cells was performed, where the two cells had mismatched initial voltages before charging was begun. Charging of the cells was simulated using a modeled conventional series charge control circuit similar to that shown in Figure 1. The initial voltage assigned to cell 1 was 1.0 Volts. The initial voltage assigned to cell 2 was 0.3 Volts. A threshold summed voltage of 3.3 Volts was assigned as the termination of charge voltage.

Figure 3 shows the results of the first simulation. As discussed above, the two cells had mismatched initial voltages before the charge cycle began. Because the two cells were series-connected and therefore received equal amounts of charging current during the charge cycle, the voltages of the two cells were also not equal when charging was terminated. The total voltage across the two series-connected cells at end-of-charge was 3.3 Volts for an average of 1.65 Volts across each cell. At end-of-charge, however, the actual individual voltages across the cells were 2.0 Volts and 1.30 Volts for cells 1 and 2, respectively. Thus, cell 1 was overcharged and cell 2 was undercharged.

The first computer simulation confirmed previous laboratory observations, where it was observed that lithium-ion and rechargeable alkaline batteries having mismatched initial voltages could not tolerate repeated discharge/charge cycles in a conventional series charge control circuit without experiencing a high degree of cell divergence. It was further determined that conventional series charge control circuit topologies increased safety hazards and reduced cell performance when lithium-ion or rechargeable alkaline batteries having mismatched initial voltages were subjected to repeated discharge/charge cycles therein. Cell overcharging, as opposed to cell undercharging, was determined to cause the greatest safety hazards and to reduce performance by the greatest amount for lithium-ion and rechargeable alkaline batteries having mismatched initial voltages.

A second computer simulation of the discharge response of a battery pack containing four series-connected rechargeable alkaline manganese dioxide cells was performed next, where one of the cells had a mismatched initial voltage before discharge was begun. Discharging of the cells was simulated using a modeled resistive load. Discharge was terminated when the total series voltage of the battery pack dropped to 4.0 Volts. The initial conditions of the charging simulation included three of the four cells having the same voltage prior to the beginning of the first discharge cycle, and one of the cells having a lower initial voltage than the other three cells. The initial voltage assigned to cells 1-3 was 1.5 Volts. The initial voltage assigned to cell 4 was 0.9 Volts.

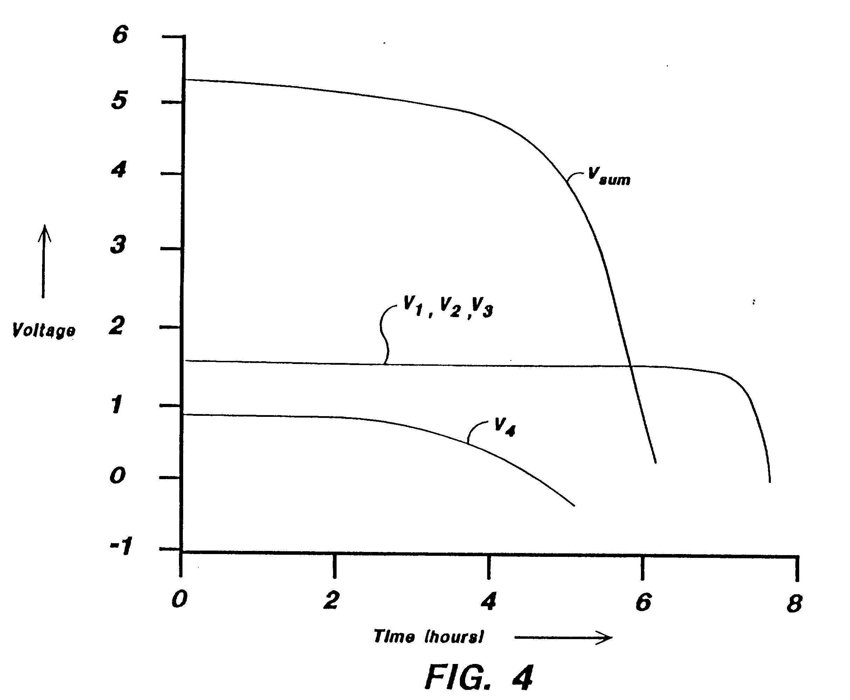

Figure 4 shows the results of the second simulation. Vₛᵤₘ is the total voltage across the battery pack. The four cells were series-connected and therefore delivered equal amounts of current during discharge. Because the initial voltage of cell 4 was lower than that of cells 1, 2 or 3, the voltage of cell 4 dropped even lower once discharge began. Discharge was terminated when Vₛᵤₘ reached 4.0 Volts. Figure 3 shows that when discharge was terminated, cells 1, 2 and 3 had a voltage of about 1.5 Volts each and were still providing current to the load. Figure 4 also shows, however, that cell 4 was driven into reversal (e.g., the voltage of cell 4 became negative) before discharge was terminated.

Subsequent laboratory tests confirmed the behavior of rechargeable alkaline batteries indicated by the second simulation. It was discovered that a rechargeable alkaline battery having a mismatched low voltage prior to discharge that is subsequently driven into reversal during discharge generally should not be restored to a positive voltage polarity upon recharge to avert leakage of electrolyte from the battery. Thus, many reversed batteries are permanently damaged (and therefore rendered useless) by reversal. It was discovered that reversed rechargeable batteries occasionally restore themselves spontaneously to a positive voltage polarity when permitted sufficient time to recover following discharge. It was discovered further that a reversed rechargeable alkaline battery should not be forced to change its voltage polarity through charging. Otherwise, electrolyte may leak from the reversed cell during charging. Instead, a reversed battery should be permitted to rest until it spontaneously changes polarity. As discussed, however, spontaneous change of a reversed rechargeable alkaline battery's voltage polarity occurs only occasionally. Thus, some rechargeable alkaline batteries driven into reversal remain in that state permanently.

A third computer simulation of the discharge response of a battery pack containing two series-connected rechargeable alkaline manganese dioxide cells was performed. The two cells had matched initial voltages but slightly mismatched total coulometric capacities before discharge began. (Mismatched coulometric capacities were chosen as an initial condition for the third simulation because normal variations in cell manufacturing processes often result in zinc anode gel weight differences between cells.) Discharging of the cells was simulated using a modeled resistive load. The initial conditions of the charging simulation included the two cells having the same voltage before discharge began, and one of the cells having a slightly lower total coulometric capacity than the other cell. The initial voltage assigned to cells 1-3 was 1.5 Volts. The initial voltage assigned to cell 4 was 0.9 Volts.

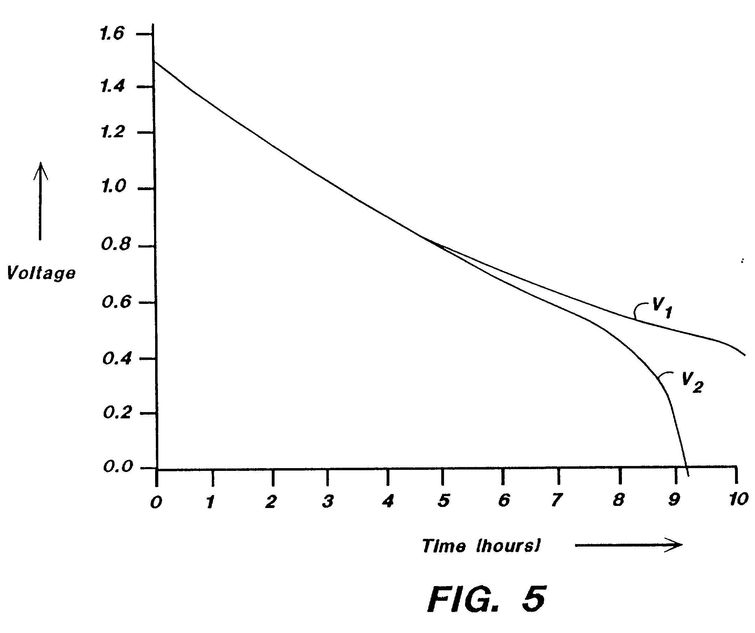

Figure 5 shows the results of the third simulation, where the individual voltages of series-connected. Cells 1 and 2 were series-connected and therefore delivered equal amounts of current during discharge. As stated, the total coulometric capacity of cell 2 was lower than that of cell 1. The effect of one cell having a lower coulometric charge was revealed as discharge proceeded below 0.9 Volts. Below that voltage, the voltage of cell 2 began to diverge from, and became lower than that of, cell 1. The further discharge proceeded below 0.9 Volts, the greater became the difference in voltage between cell 1 and cell 2. Figure 5 shows that cell 2 was eventually driven into reversal. Figure 5 shows further that termination of discharge prior to an individual cell CCV of 0.9 Volts being reached would have prevented, or at least decreased the magnitude of, cell divergence. Subsequent laboratory tests confirmed the behavior of rechargeable alkaline batteries indicated by the third simulation.

Laboratory testing and the computer simulations described above show that rechargeable alkaline batteries are particularly sensitive to in-circuit series charging conditions. More particularly, it was discovered that rechargeable alkaline batteries present greater safety hazards when overcharged, are highly susceptible to cell divergence if overdischarged, and may be driven into a condition of irreversible voltage reversal when overdischarge is particularly severe. Thus, conventional in-circuit series charging circuits should not be used to recharge rechargeable alkaline batteries. As a result, heretofore users often removed rechargeable alkaline batteries from devices containing conventional in-circuit series charging circuits so that the individual cells could be charged safely and effectively in an external battery charger.

Switch-mode equalizing charging circuits use a transformer or large capacitor to transfer current from one cell to another during charge, thereby balancing the voltages of series-connected secondary cells. In the transformer embodiment of the switch-mode equalizing charging circuit, the windings are switched on and off at high frequency. This effectively places the cells in parallel (in respect of ac) during a portion of the charge period, without disturbing the physical series DC electrical connection of the cells. As a result, charge is transferred from higher-voltage cells to lower-voltage cells during charging until all cells attain a matched state of charge. Switch-mode equalizing charging circuits require power transferring circuitry to balance cell charge and voltage levels.

Power transferring circuitry is often bulky, heavy, and may add significant cost to a circuit. Power transferring circuitry components typically include power semiconductors and relatively large transformers or capacitors. Those types of components generally account for the majority of the cost and physical size in switch-mode equalizing charging circuits. Moreover, in a switch mode equalizing charging circuit, such components must be disposed across each cell, resulting in a fixed incremental cost that is directly proportional to the number of cells added to the system.

The present invention provides solutions to many of the problems presented by in-circuit series charging circuits known heretofore. The battery management circuit of the present invention is generally less expensive to manufacture, has fewer electronic and power electronic components, occupies less volume, weighs less, is easier to implement, prevents or minimizes cell reversal during discharge better, and extends the life of secondary cells further than in-circuit series charging circuits known in the prior art.

The battery management circuit of the present invention does not contain, and the method of the present invention does not require, any regulating, power dissipative or expensive power electronics circuitry to balance cell charge and voltage levels. Instead, the present invention requires only one power switch for charging all cells. Low power control electronics are used in each stage, thereby reducing substantially the cost of the circuit in comparison to switch-mode equalizing charging circuits containing relatively expensive power electronics components.

The method and circuit of the present invention keep cell charge and voltage levels matched to one another by terminating discharge such that cell divergence does not increase substantially from one discharge/charge cycle to another. Additionally, the present invention does not permit individual cells to overdischarge. During charging, the present invention prevents overcharging of any individual cell, thus avoiding the safety hazards associated with overcharging. Repeated discharge/charge cycling of a battery pack containing a plurality of series-connected secondary cells in a device is permitted, where cycling is accomplished by an in-circuit series charging circuit and method of the present invention.

Thus, the method and circuit of the present invention prevent overcharge, overdischarge, and divergence of series-connected cells, while eliminating the cost, size, and weight required in shunt-regulating or switch-mode equalizing architectures. The circuit and method of the present invention find particular application in those types of batteries that are especially sensitive to overcharge and overdischarge (e.g., rechargeable alkaline and lithium-ion batteries). The present invention provides optimum results when cell parameters such as battery type, age, state of charge, internal impedance and capacity are reasonably well matched to one another before the first discharge/charge cycle. For example, the invention is not likely to provide good results when rechargeable nickel cadmium and alkaline manganese dioxide cells, or new and used rechargeable alkaline manganese dioxide cells, are mixed in the same string of series-connected cells.

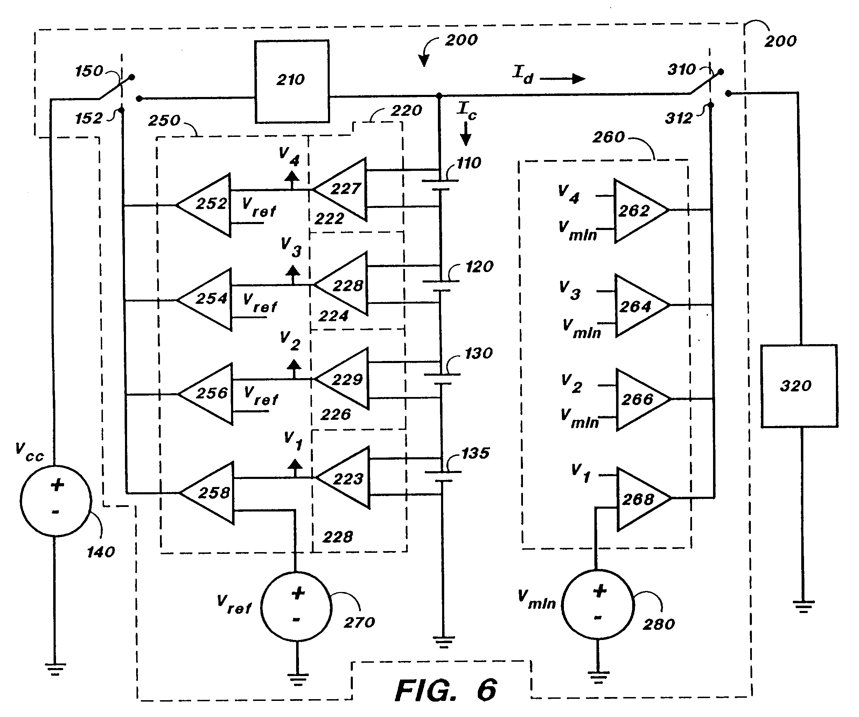

Figure 6 shows a block diagram of a first embodiment of the battery management circuit of the present invention. The circuit shown in Figure 6 is a pulse-modulated voltage-controlled charging and discharging system. Those of ordinary skill in the art will appreciate readily that other topologies not shown explicitly in the drawings, such as DC or constant-current topologies, also fall within the scope of the present invention. The basic components of battery management circuit 200 in Figure 6 are input power switch 150, differential cell voltage monitoring circuit 220, charge control circuit 250, discharge control circuit 260, output power switch 310, charge limit reference voltage source 270, and discharge limit reference voltage source 280. Current limiting circuit or component 210 may optionally be included in battery management circuit 200, depending on the specific requirements and characteristics of circuit 200, and those of the cells contained therein. Power source 140 is generally external to circuit 200, but may be incorporated therein. Likewise, load 320 is generally external to circuit 200, but may also be incorporated therein.

Cells 110, 120,130 and 135 are series-connected, and are charged and discharged in battery management circuit 200. Because they are series-connected, the same charging current I_{c} is delivered to cells 110, 120, 130 and 135 during charging. During discharge, the same discharging current I_{d} flows through all cells. Circuit 200 charges and discharges two or more series-connected cells. Circuit 200 may also charge and discharge more than four series-connected cells; provided, however, that the corresponding circuitry required to charge and discharge more than four cells is removed or added to charging circuit 200.

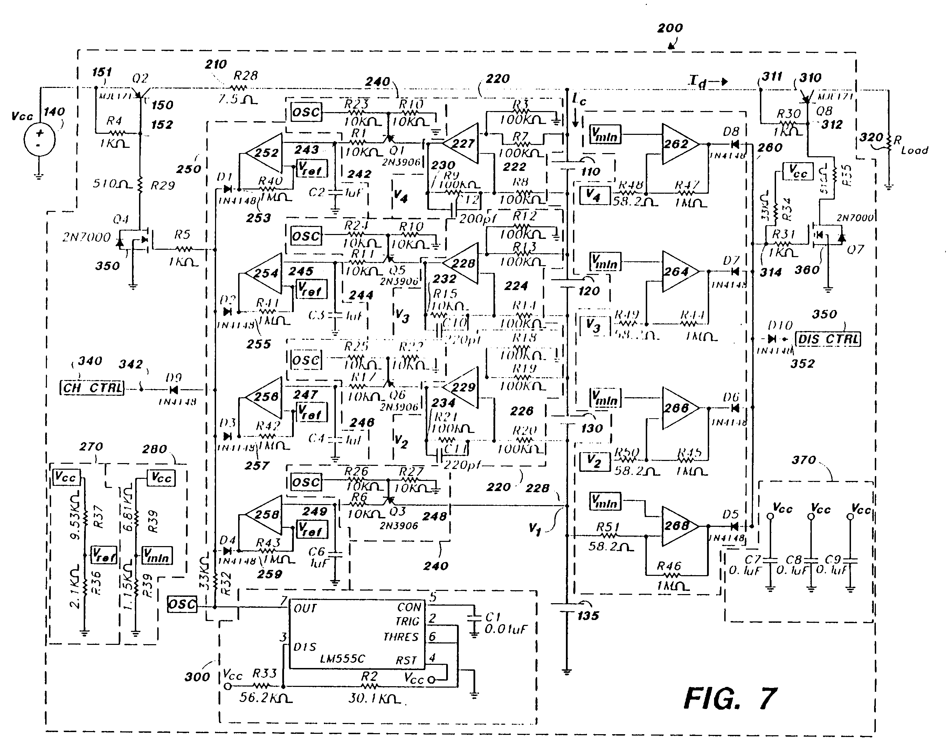

Differential cell monitoring control circuit 220 comprises four differential amplifier circuits 227, 228, 229 and 223. Those circuits correspond to cells 110, 120, 130 and 135, respectively. Each differential amplifier circuit has two inputs disposed across the positive and negative electrodes of the cell corresponding thereto, and provides an output voltage corresponding to the instantaneous voltage of that cell. Voltages V₁, V₂, V₃ and V₄ are the first output voltages of operational amplifiers 223, 229, 228 and 227, respectively, and correspond to the instantaneous OCVs or CCVs of cells 110, 120, 130 and 135, respectively, depending on whether oscillator 300 (not shown in Figure 6, but shown in Figure 7) is providing a high or low output signal when the voltage is measured.

Charge control circuit 250 comprises four comparators 252, 254, 256 and 258. Those comparators correspond to cells 110, 120, 130 and 135, respectively. Each of comparators 252, 254, 256 and 258 receives two input signals: (1) the OCV of the cell corresponding to the comparator (e.g., the first output voltage), and (2) a first predetermined reference voltage provided by charge limit reference voltage source 270. The output voltage provided by any one of the charge control comparators remains high so long as the first predetermined voltage exceeds the OCV of the cell to which the comparator corresponds. When the OCV of any cell exceeds the first predetermined voltage (e.g., when any cell attains a full or high state of charge), the output voltage provided by the charge control comparator corresponding to the cell having the full state of charge becomes a low first control voltage provided at a first control input 152 of switch 150, the first control voltage disabling input power switch 150, thereby terminating the provision of charging current I_{c} to the cells.

In one embodiment of the present invention, differential cell monitoring control circuit 220 and charge control circuit 250 may be combined into a single functional unit, where the difference in voltage across the positive and negative terminals of each cell is sensed, and charging of all cells is terminated when one cell in the series-connected string attains a first predetermined voltage.

When charging current I_{c} is provided to cells 110, 120, 130 and 135, the same amount of current flows through each cell. If during charging it occurs that one cell is closer to a full or high state of charge than the others, that cell would be overcharged if charging continued until some average or summed cell voltage corresponding to an average full state of charge were attained. Initial cell capacities can be mismatched easily, and thus differing states of charge may exist between cells. Differences in relative states of charge may lead to overcharging, which may damage one or more of the cells. In Figure 6, monitoring stages connected to each cell terminate charging as soon as the first cell in the series-connected string attains a voltage corresponding to a full or high state of charge. Thus, cell overcharge is prevented.

Discharge control circuit 260 comprises four discharge control comparators 262, 264, 266 and 268. Those comparators correspond to cells 110, 120, 130 and 135, respectively. Each discharge control comparator receives two input signals: (1) the CCV of the cell corresponding to the comparator (e.g., the first output voltage, or V₄, V₃, V₂ or V₁), and (2) a second predetermined reference voltage provided by discharge limit reference voltage source 280. The output voltage provided by any discharge control comparator remains high provided the second predetermined voltage is less than the CCV of the cell corresponding to the comparator. When the CCV of any cell becomes less than the second predetermined voltage (e.g., when the cell attains an empty or low state of charge), the output voltage of the discharge control comparator corresponding to that cell becomes a low second control voltage provided at a second control input 312, the second control voltage disabling output power switch 310, thereby terminating the provision of discharging current I_{d} to load 320.

Charge limit reference voltage source 270 and discharge limit reference voltage source 280 may be provided by voltage divider networks as shown in Figure 7, or may be provided by other types of voltage reference devices, generators, circuits or components such as LP2980 and LP2941 chips, other three-terminal package voltage reference generators, or zener diodes.

When discharging current I_{d} is provided by the cells, the same amount of current flows through all cells. If during discharge one of the cells is closer to an empty or low state of charge than the others, that cell would be overdischarged, possibly into reversal, if discharge continued until some average or summed cell voltage corresponding to an empty state of charge were attained. Differences in relative states of charge between cells due to initial cell mismatch may cause overdischarge or reversal of one or more of the cells. In the present invention, a monitoring stage is provided across each cell, thereby permitting discharge termination as soon as any cell in the series-connected string attains a voltage corresponding to an empty or low state of charge. Thus, cell overdischarge and reversal are prevented.

During charging, input power switch 150 is closed, allowing charging current I_{c} to be provided to cells 110, 120, 130 and 135. When battery management circuit 200 is a DC charging system, input power switch 150 may be closed fully during charging to permit maximum charge current I_{c} to be provided to the cells. Alternatively, input power switch 150 may be controlled so that a regulated, constant, but less-than-maximum amount of current is provided to the cells. When battery management circuit 200 is a pulse-charging system, input power switch 150 is alternatively opened and closed to permit pulses of current to be applied to the cells. The duty cycle and frequency of input power switch 150 may be constant, or may be varied during charging, depending on the design and requirements of battery management circuit 200 and the cells.

Figure 7 shows a preferred version of the first embodiment of the invention, where a schematic circuit diagram corresponding to battery charging and discharging system 200 is illustrated. In Figure 7, the basic components of battery management circuit 200 are input power switch 150 (Q2), differential cell voltage monitoring circuit 220, OCV monitoring circuit 240, charge control circuit 250, discharge control circuit 260, output power switch 310 (Q8), charge limit reference voltage source 270 (V_{ref}), and discharge limit reference voltage source 280 (Vₘᵢₙ). In the preferred embodiment of the invention shown in Figure 7, current limiting component 210 is a 7.5 Ohm power resistor. Powersource 140 (V_{cc}) is generally external to circuit 200, but may be incorporated therein. Likewise, load 320 is generally external to circuit 200, but may also be incorporated therein.

In Figure 7, power source 140 is a regulated voltage source providing a uniform or nearly uniform output voltage V_{cc} of about 9 Volts. Depending on the load connected to battery management circuit 200, however, power source 140 may be a regulated power source such as a constant power supply, or any other type of power source capable of providing a uniform or nearly uniform output voltage V_{cc} of about 9 Volts. Input power switch 150 selectively provides charging current to the cells, and is an MJE171 PNP transistor switch, or any other suitable switching device such as an NPN BJT or an NMOS or PMOS FET. A positive bias must be applied at node 151 in respect of node 152 for current to flow from power source 140 to cells 110, 120, 130 and 135 via input power switch 150 and through current limiting component 210. The base (or gate) of input power switch 150 is a first control input capable of enabling and disabling switch 150, and has the voltage appearing at node 152.

Output power switch 310 selectively provides discharging current from the calls to load 320, and is an MJE171 PNP transistor switch, or any other suitable switching device such as an NPN BJT or an NMOS or PMOS FET. A positive bias must be applied at node 311 in respect of node 312 for current to flow from cells 110, 120, 130 and 135 to load 320 (shown in Figure 7 as a resistor R_{Load}). The base (or gate) of output power switch 310 is a second control input capable of enabling and disabling switch 310, and has the voltage appearing at node 312.

Input power switch 150 and output power switch 310 are complementary devices in the respect that when one of those devices is ON the other device is OFF, and vice-versa. Contrariwise, switches 350 and 150, and switches 360 and 310, do not form pairs of complementary devices in the respect that both pairs of switches are either OFF or ON when in their steady states.

Cells 110, 120, 130 and 135 are series-connected, and are charged and discharged in battery management circuit 200. Because they are series-connected, the same charging current I_{c} is delivered to the cells from power source 140 during charging. During discharge, discharging current I_{d} is provided by all of cells 110, 120, 130 and 135, and flows through load 320. Battery management circuit 200 charges and discharges two or more series-connected cells. Battery management circuit 200 may also charge and discharge more than four series-connected cells;, provided, however, that the corresponding circuitry required to charge and discharge more than four cells is removed or added to circuit 200.

Differential cell monitoring control circuit 220 comprises three differential amplifier circuits 222, 224 and 226. Those circuits correspond to cells 110, 120 and 130, respectively. In the embodiment of the invention shown in Figure 7, cell 135 requires no differential amplifier circuit because its negative terminal is connected to ground, and thus the instantaneous voltage of cell 135 appears at node 228 as V1. Each differential amplifier circuit has two inputs: A first input is connected to the positive terminal of the cell corresponding thereto; a second input is connected to the negative terminal of the same cell. The two inputs of each of differential amplifier circuits 222, 224 and 226 are connected to the input terminals of operational amplifiers 227, 228 and 229, respectively. The voltages appearing at the outputs of operational amplifiers 227, 228 and 229 at nodes 230, 232 and 234 are the instantaneous voltages V₄, V₃, and V₂ (or the first output voltages) of cells 110, 120 or 130, respectively, at any given time. As discussed, voltage V1 likewise corresponds to a first output voltage (or the OCV or CCV of cell 135), and appears at node 228.

OCV monitoring circuit 240 comprises four OCV-sensing networks 242, 244, 246 and 248. Each OCV-sensing network comprises a PNP transistor, a voltage divider network, and a 10 kΩ output resistor. Each of PNP transistors Q1, Q5, Q6 and Q3 has its emitter connected to the output of the preceding differential amplifier circuit, its base connected to an input from the voltage divider network, and its collector connected to the output of the OCV sensing network. Comparators 242, 244, 246 and 248 correspond to cells 110, 120, 130 and 135, respectively. When the clock signal provided by oscillator 300 is low (and no charging current I_{c} is being provided to cells 110, 120, 130 and 135), transistors Q1, Q5, Q6 and Q3 are ON, and thus provide the OCVs of the individual cells as outputs at nodes 243, 245, 247 and 249.

In the embodiment of battery management circuit 200 shown in Figure 7, oscillator 300 is an LM555C integrated circuit, and provides a fixed frequency (120 Hz), fixed duty cycle clock output signal. The frequency of oscillator 300 may be adjusted by changing the values of resistances R₃₃ and R₂, and capacitances C₁ and C₅. Those skilled in the art will recognize that other types of oscillators, oscillator circuits or clocks may be used in place of the I_{c} shown in Figure 7, and that such alternative embodiments fall within the scope of the present invention.

Charge control circuit 250 comprises four comparators 252, 254, 256 and 258. Those comparators correspond to cells 110, 120, 130 and 135, respectively. Each charge control comparator receives two input signals: (1) the OCV of the cell corresponding to the comparator (*e.g.*, the first output voltage), and (2) a first predetermined reference voltage provided by charge limit reference voltage source 270. The output signal provided by each charge control comparator remains high so long as the first predetermined voltage exceeds the OCV of the cell to which the comparator corresponds. When the outputs provided by all charge control,comparators are high, input power switch 150 is driven at the frequency and duty cycle of oscillator 300. When battery management circuit 200 provides charging current I_{c} to the cells, diodes D1, D2, D3 and D4 are all reverse biased, and third switch 350 therefore alternately turns ON and OFF in response to the high and low output signals generated by oscillator 300. Input power switch 150, in turn, is alternately driven ON and OFF by the output signal provided by third switch 350. In the embodiment of the invention shown in Figure 7, third switch 350 (or Q4) is a 2N7000 NMOS FET, but may also be a PMOS FET, PNP BJT, NPN BJT, or any other suitable electronic switching device.

If during charging the OCV of a cell exceeds the first predetermined voltage (e.g., the cell attains a full or high state of charge), the output voltage of the charge control comparator corresponding to that cell changes to a low first control voltage, and the diode connected to the output of the comparator is no longer reverse biased. Thus, the first control voltage from the comparator pulls the gate voltage of third switch 350 down, turns third switch 350 OFF, and clamps input power switch 150 OFF (regardless of whether the drive signal provided by oscillator 300 is high or low), all in response to a low output signal being provided by third switch 350 to the first control input of switch 150. Thus, as soon as any charge control comparator provides a first control voltage as an output in response to a cell attaining a full state of charge, the provision of charging current I_{c} to all cells is terminated, thereby preventing cell overcharge. Optionally, termination of charge may be effected by using charge control input 340 to provide a low (or ground) signal at node 342.

Discharge control circuit 260 comprises four discharge control comparators 262, 264, 266 and 268. Those comparators correspond to cells 110, 120, 130 and 135, respectively. Each discharge control comparator receives two input signals. (1) the CCV of the cell corresponding to the comparator (*e.g.*, the first output voltage), and (2) a second predetermined reference voltage provided by discharge limit reference voltage source 280. The output voltage provided by any discharge control comparator remains high so long as the second predetermined voltage is less than the CCV of the cell corresponding to the comparator. When the outputs provided by all discharge control comparators are high, output power switch 310 is ON and delivers discharging current I_{d} to load 320.

When battery management circuit 200 is providing discharging current I_{d} to load 320, each of diodes D5, D6, D7 and D8 is reverse biased. Under those conditions, the voltage appearing at node 314 is sufficiently high to keep switch 360 ON. The voltage appearing at node 314 is provided by the voltage divider network comprising voltage source V_{cc}, resistor R31 and resistor R34, and corresponds to the voltage appearing at the gate of fourth switch 360. When switch 360 is ON, the voltage appearing at the base of output power switch 310 is low, thereby causing switch 310 to remain ON and delivering discharging current I_{d} to load 320. In the embodiment of the invention shown in Figure 7, fourth switch 360 (or Q7) is a 2N7000 NMOS FET, but may also be a PMOS FET, PNP BJT, NPN BJT, or any other suitable switching device.

If during discharge the CCV of a cell becomes less than the second predetermined voltage (*e.g.*, the cell attains an empty or low state of charge), the output voltage of the discharge control comparator corresponding to that cell will change to a low second control voltage, and the diode connected to the output of the comparator will no longer be reverse biased. Thus, the second control voltage from the comparator pulls the gate voltage of fourth switch 360 down, thereby causing fourth switch 360 to turn OFF, and clamping output power switch 310 OFF in response to a low output signal being provided by fourth switch 360 to the second control input of switch 310. Thus, as soon as any discharge control comparator provides a second control signal as an output in response to a cell attaining an empty or low state of charge, the provision of discharging current I_{d} is terminated, and cell overdischarge is prevented. Optionally, termination of discharge may be effected by using charge control input 340 to provide a low (or ground) signal at node 342.

In the embodiment of the invention shown in Figure 7, the combination of discharge control comparators 262, 264, 266 and 268 and appropriately selected resistors R48, R47, R49, R44, R50, R45, R51 and R46 associated with the comparators provides hysteretic control for the discharge portion of circuit 220. During cell discharge, CCVs V₄, V₃, V₂ and V₁ are compared to Vₘᵢₙ. Those comparisons reveal whether the CCV of any individual cell has reached a voltage substantially equal to the second predetermined voltage (the lowest voltage permitted in any cell before charging is terminated). In the embodiment of the invention shown in Figure 7, Vₘᵢₙ is selected to be 0.90 Volts, although any other different, appropriate second predetermined voltage level could have been selected. In accordance with the hysteretic control of the discharge control circuit, and after discharge has been terminated in response to at least one cell having attained an empty state of charge, cells 110, 120, 130 and 135 must be charged above 1.40 Volts before discharge of the cells is permitted by the circuit. Thus, a "hysteresis window" of 0.90 Volts to 1.40 Volts is provided in the embodiment of the invention shown in Figure 7. The width of the hysteresis window and the upper and lower voltages corresponding to the window may be adjusted by changing Vmin, the resistance values of the resistors associated with the discharge control comparators, V_{cc} or R34.

Block 370 in Figure 7 shows that bypass capacitors C7, C8 and C9 may be interposed between V_{cc} and ground to provide local power supply filtering for each integrated circuit in battery management circuit 200.

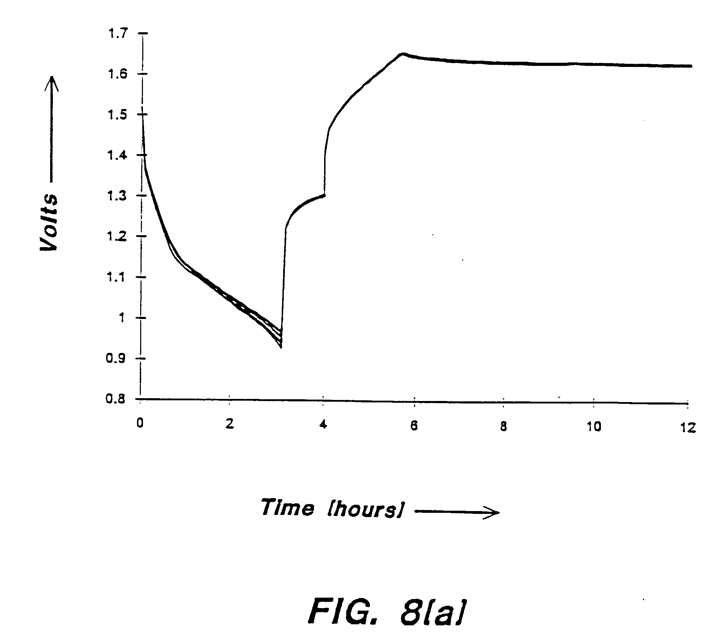

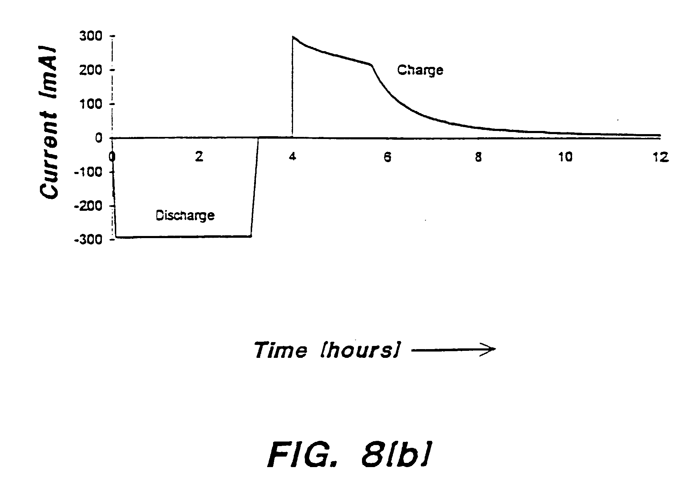

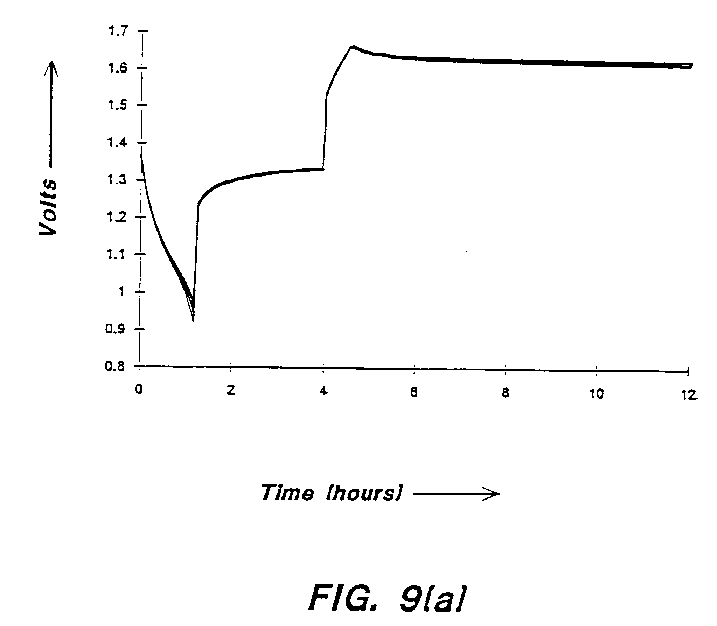

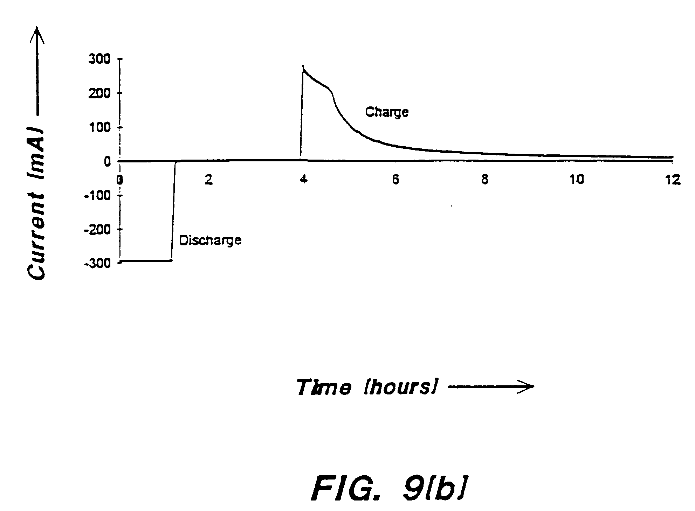

Figure 8(a) shows discharge and charge voltage profiles for each of four fresh AA rechargeable alkaline RAYOVAC® RENEWAL® cells contained in a single battery pack and connected electrically in series, where the cells were initially discharged, permitted to rest or rebound for a predetermined amount of time, and then recharged for the first time using the circuit of Figure 7. Figure 8(b) shows the load current corresponding to the voltage profiles of Figure 8(a). Referring now to both Figures 8(a) and 8(b), it may be observed that as soon as one cell attained a voltage of about 0.9 Volts on discharge, discharge was terminated. Termination of charge occurred after about three hours of discharge. Between three and four hours, no cells in the pack received charging current during a rest period. During the rest or rebound period, cell voltages returned spontaneously to higher levels when no load was placed on the cells. After four hours passed following termination of discharge, charging current was again supplied to all cells. Figure 8(a) shows that individual cell voltages track one another very closely during the recharge portion of the discharge/charge cycle. Figure 9(a) shows the discharge/charge profile of the same batteries during the twentieth discharge/charge cycle. The time at which discharge is terminated is less in Figure 9(a) than it is in Figure 8(a). This kind of behavior is well known in rechargeable alkaline cells, where cell capacity decreases with each successive discharge/charge cycle. Nevertheless, the shapes of the voltage and current profiles shown in Figures 9(a) and 9(b) are essentially the same as those shown in Figures 8(a) and 8(b), indicating that the circuit of Figure 7 operates in much the same manner during the twentieth discharge/charge cycle as it does during the first discharge/charge cycle. A slight increase in voltage variation between cells, however, may be observed in the discharge portion of Figure 9(a).

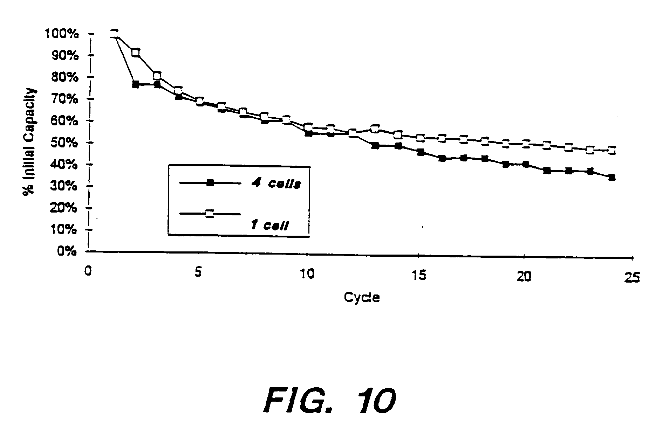

Figure 10 compares the relative capacity fades measured in (1) four series-connected RENEWAL@ cells, and (2) a single RENEWAL@ cell. The four series-connected cells and the single cell were discharged and charged in a circuit like that shown in Figure 7. Figure 10 shows that after the twentieth discharge/charge cycle, the difference in capacity fade between the series-discharged and charged battery pack and the individual cell is only about 10%. This small difference in capacity fade demonstrates the effectiveness of the circuit and method of the present invention. Had discharge of the cells in the battery pack been terminated at voltages above 0.90 Volts, the degree of divergence between individual cell voltages, and the amount of relative capacity fade, would have been even less than that shown in Figure 10.

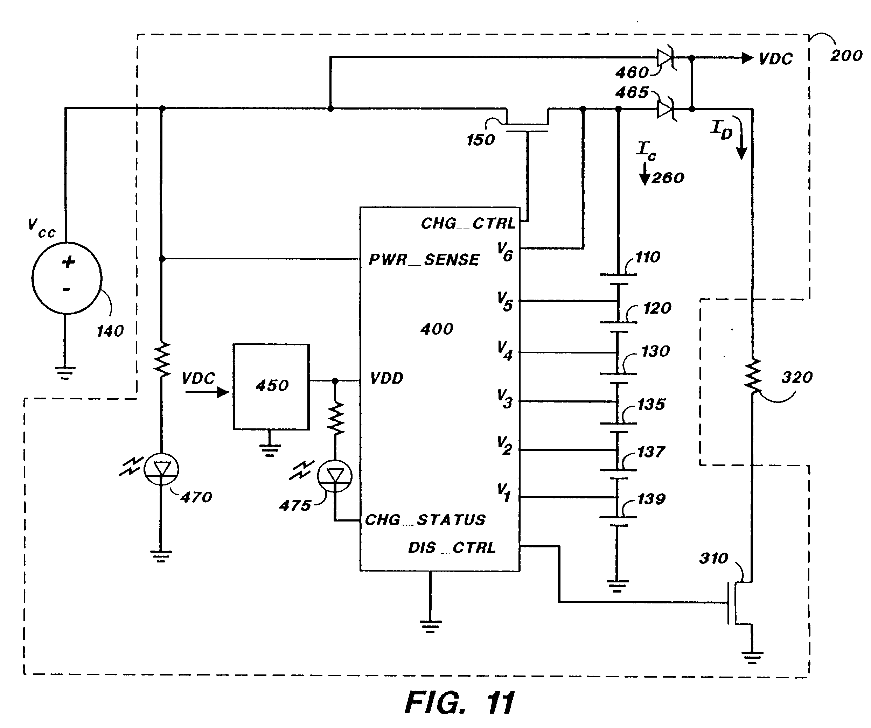

Figure 11 shows a block diagram of a second embodiment of the battery management circuit of the present invention. The circuit shown in Figure 11 is a pulse-modulated voltage-controlled charging and discharging system. Those of ordinary skill in the art will appreciate readily that other topologies not shown explicitly in the drawings, such as DC or constant-current topologies, also fall within the scope of the present invention. The basic components of battery management circuit 200 in Figure 11 are power source 140, input power switch 150, microprocessor 400, voltage regulator 450, output power switch 310, and (optionally) diodes 460 and 465. In respect of the circuit shown in Figures 6 and 7, microprocessor 400 permits additional features to be incorporated into battery management circuit 200, and also permits circuit parameters to be changed by rewriting software rather than modifying the physical structure of the circuit.

Cells 110, 120, 130, 135, 137 and 139 are series-connected, and are charged and discharged in battery management circuit 200. Because they are series-connected, the same charging current I_{c} is delivered to cells 110, 120, 130 and 135 during charging. During discharge, the same discharging current I_{d} flows through all cells. Circuit 200 charges and discharges two or more series-connected cells. Circuit 200 may also charge and discharge more than four series-connected cells; provided, however, that the corresponding circuitry required to charge and discharge more than four cells is removed or added to charging circuit 200.

In the version of the second embodiment of the invention shown in Figure 11, power source 140 is a 12 Volt, 500 mA voltage source, and load 320 is a battery-operated device drawing 100 to 300 mA at 6 to 10 Volts. Input power switch 150 is an most preferably PMOS FET, and output power switch is most preferably an NMOS FET. Microprocessor 400 senses the individual instantaneous voltages across each of cells 110, 120, 130, 135, 137 and 139, and converts each voltage to a digital (numerical) value. The numerical value corresponding to each cell voltage is compared to a first predetermined reference value stored in the memory of microprocessor 400. This comparison determines whether the charging process should continue or be terminated. Microprocessor 400 alternately enables and disables input power switch 150 as it determines the OCV of cell. The functional behavior of the circuit shown in Figure 11 is similar to that of the first hardware embodiment of the invention described earlier in that charging of all cells is terminated whenever the OCV of any one cell exceeds the reference value. LED 470 is ON whenever external power is available from external power source 140 and is OFF whenever power source 140 is not available, thereby providing a power status indication to the user. While cells are being charged, microprocessor 400 sends a logic "O" to the CHG-STATUS port, which turns LED 475 ON, thereby providing an indication to the user that charging is in progress.

When power source 140 is not connected to circuit 200 (e.g., when the cells are not being charged), microprocessor 400 switches to a low power mode of operation to extend battery life. Microprocessor 400 determines the power status of the system by monitoring the PWR-SENSE line to detect the presence or absence of the power source 140. When power source 140 is not present, the cells are either in an idle state or are being discharged through load 320. In this mode of operation, microprocessor 400 senses the CCV of each cell, converts each such voltage to a corresponding numerical value, and compares each numerical value to a second predetermined reference value stored in the memory of microprocessor 400. The second predetermined reference value corresponds to a low or empty state of charge of a cell. When one of cells 110, 120, 130, 135, 137 or 139 attains a voltage corresponding to the second predetermined reference value, microprocessor 400 terminates discharge of all cells by turning output power switch 310 OFF, thereby avoiding overdischarge of the cells. Additionally, microprocessor 400 can cause LED 475 to flash prior to output switch 310 being disabled, thus warning the user that the supply of power to load 320 is about to be terminated.

Voltage regulator 450 provides a stable source of power and reference voltage to microprocessor 400. Diodes 460 and 465 permit load 320 and microprocessor 400 to be powered by either cells 110, 120, 130, 135, 137 and 139, or by an external power source. The block diagram shown in Figure 11 omits a number of components required for an actual implementation of the second embodiment of the invention.

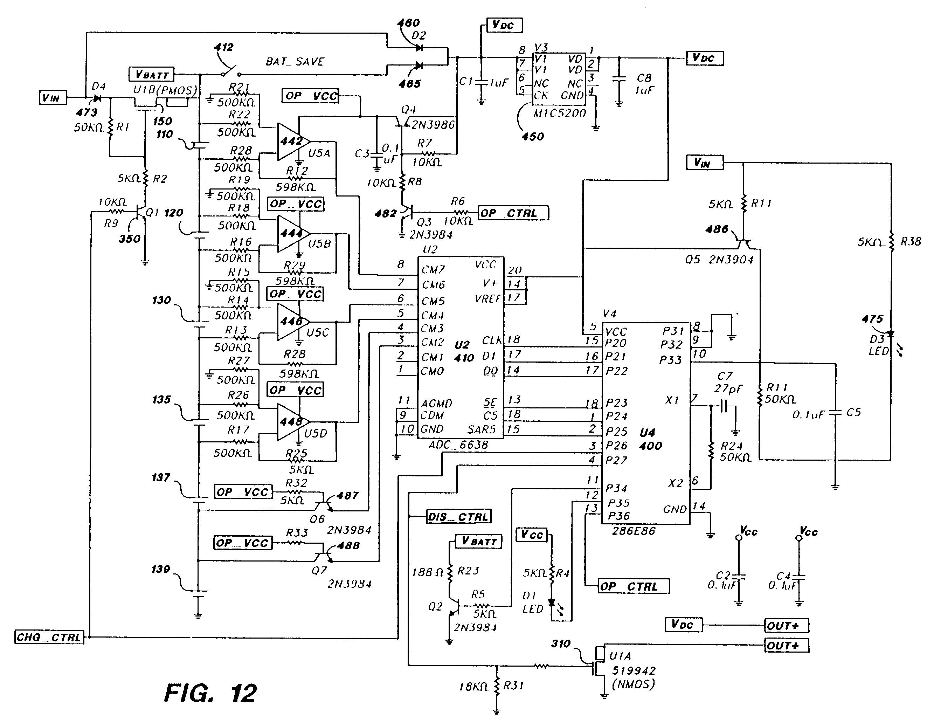

Figure 12 illustrates a practical, working battery management circuit 200 using a Zilog Z86EO6 microcontroller and additional external interface circuitry. The circuit shown in Figure 12 may be modified to utilize an advanced microprocessor (Z86C83) which integrates the functions of the A/D converter into the microprocessor (i.e. combines two I_{c}S into one). The circuitry in Figure 12 is required to properly interface the voltage and current levels of the battery management circuit with the voltages required by microprocessor 400. Additional details of the circuit shown in Figure 12 are provided in Table 1 below.

**Table 1:**

| **Descriptions and Functions of Circuitry Components Shown In Figure 12.** | |
|---|---|
| **Circuit Component(s)** | **Description and Function** |
| D1 (470) | status indicator LED |
| D2 (460,465) | (single package contains 2 diodes)- allows power sharing to load |
| D3 (475) | power indicator LED |
| D4 (473) | reverse blocking diode (prevents battery discharge through PMOS body diode) |
| | |
| R24, C7 | RC oscillator for microprocessor clock control |
| | |
| Q1 (350) | gate drive control for PMOS charge control switch |
| Q2 (480) / R23 | battery "preload" for controlled discharge (optional)- bleeds excess charge away from fully-charged cells |
| Q3(482),Q4 (484) | op-amp power control- shut off op-amp when not needed (minimize battery drain) |
| Q5 (486) | applies logic level to microprocessor power sense input (external power detect) |
| Q6 (487),Q7 (488) | disconnect A/D converter (minimize leakage current) when battery sensing is not required (same as op-amp power-down mode control) |
| | |
| S1 (412) | battery disconnect switch- disable circuit and minimize leakage current during storage (maintains battery shelf life) |
| | |
| U1 (150 and 310) | dual MOSFET package (PMOS/NMOS devices) for charge and discharge control |
| U2 (410) | 8-bit, 8-channel A/D converter with serial output interface (controlled by U4) |
| U3 (450) | micropower, low-dropout voltage regulator for U2 and U4 |
| U4 (400) | Zilog microprocessor |
| U5A, U5B, U5C, U5D (442, 444, 446, and 448, respectively) | quad op-amp package- differential amplifier configuration converts high voltage cell readings to lower values representative of individual cell levels |

Table 2 below is an example of a set of high-level functional statements approximating the low-level machine code statements used in microprocessor 400 for controlling the charge of a single RAYOVAC® RENEWAL® cell. The statements are provided primarily for illustrative purposes, and one skilled in the art may convert the statements to assembly language equivalents for a given microprocessor. Inherent in the statements is the assumption that external power is available to charge the cell. Moreover, no discharge monitoring of the cell is performed in the example set forth in Table 2.

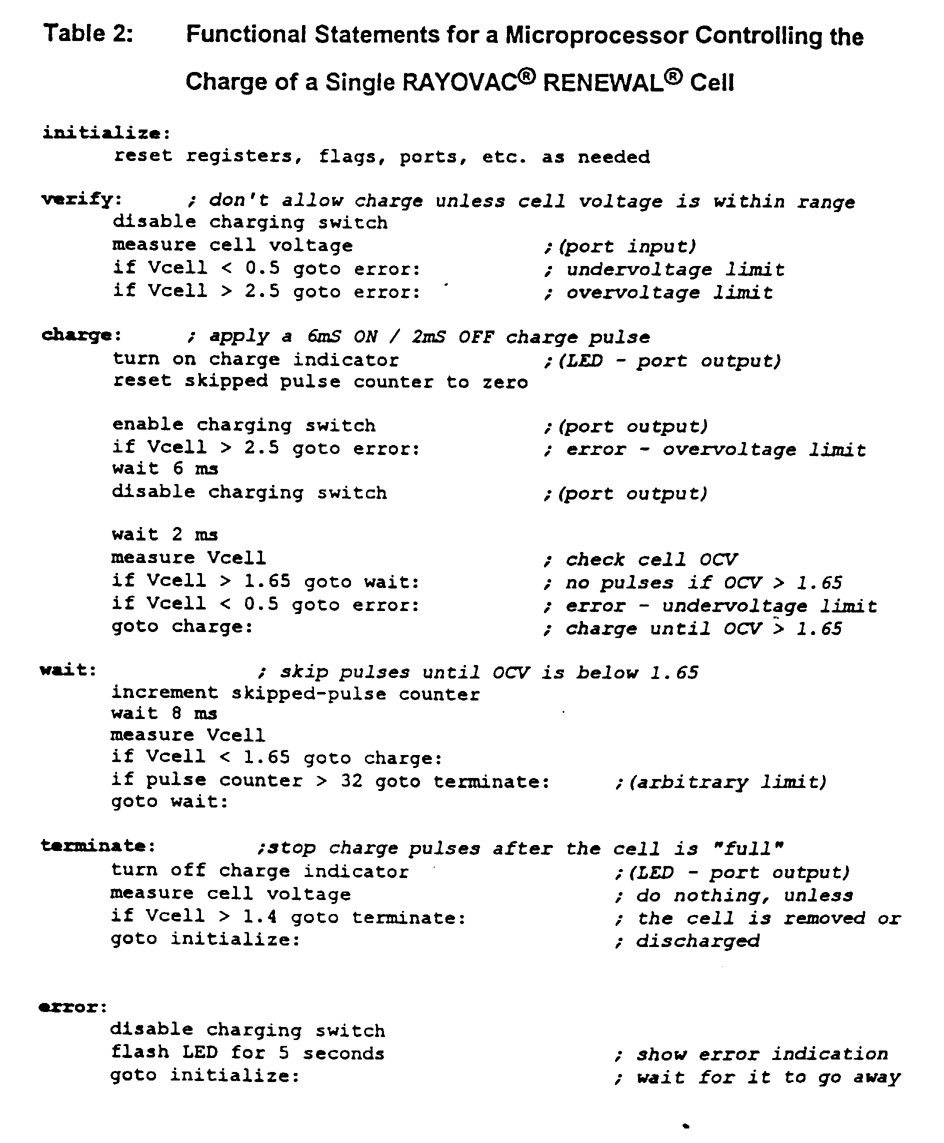

Table 3 below is an example of a set of high-level functional statements approximating the low-level machine code statements used in microprocessor 400 for controlling the charge and discharge of six series-connected RAYOVAC® RENEWAL® cells. The statements are provided primarily for illustrative purposes, and one skilled in the art may convert the statements to assembly language equivalents for a given microprocessor.

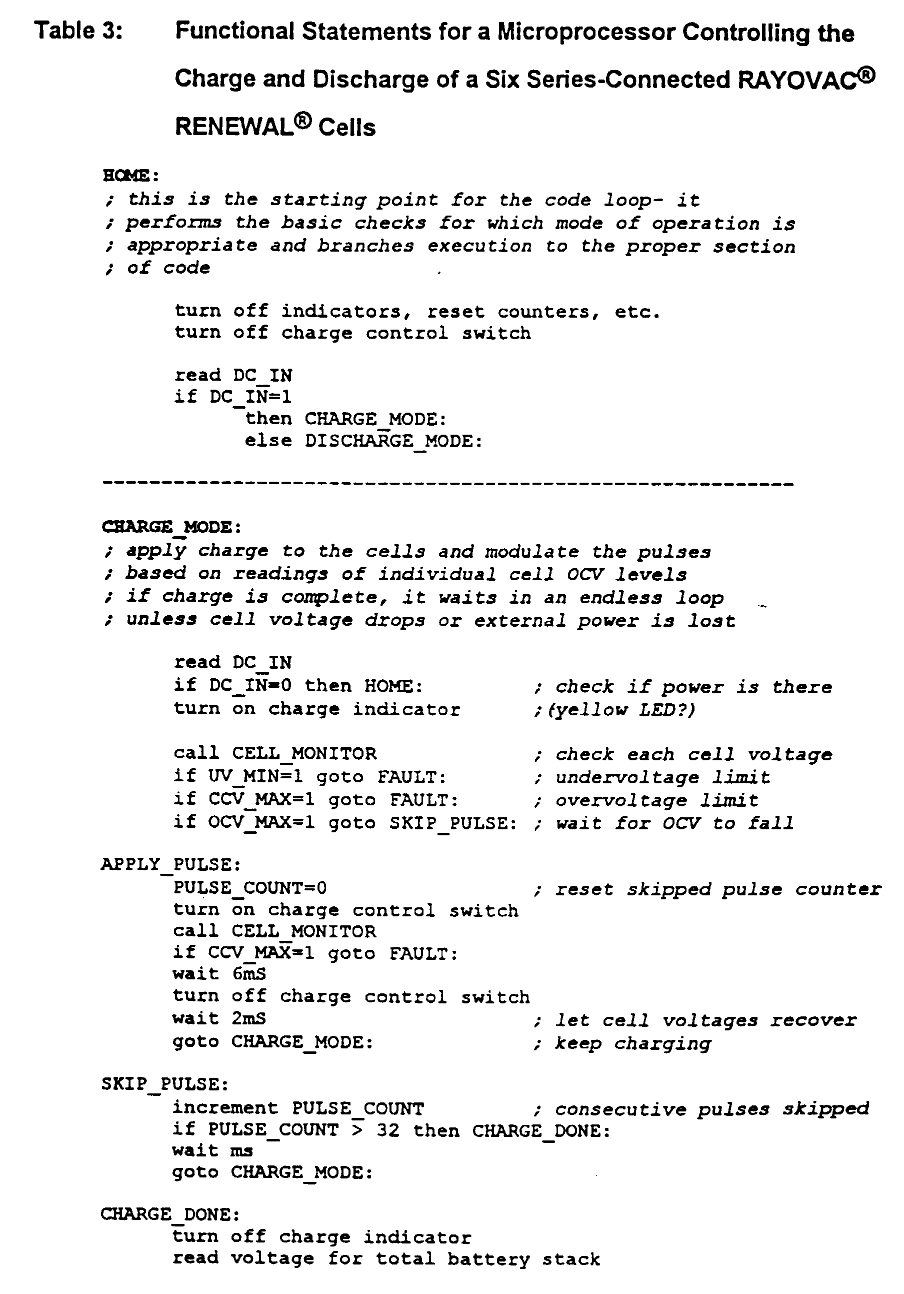

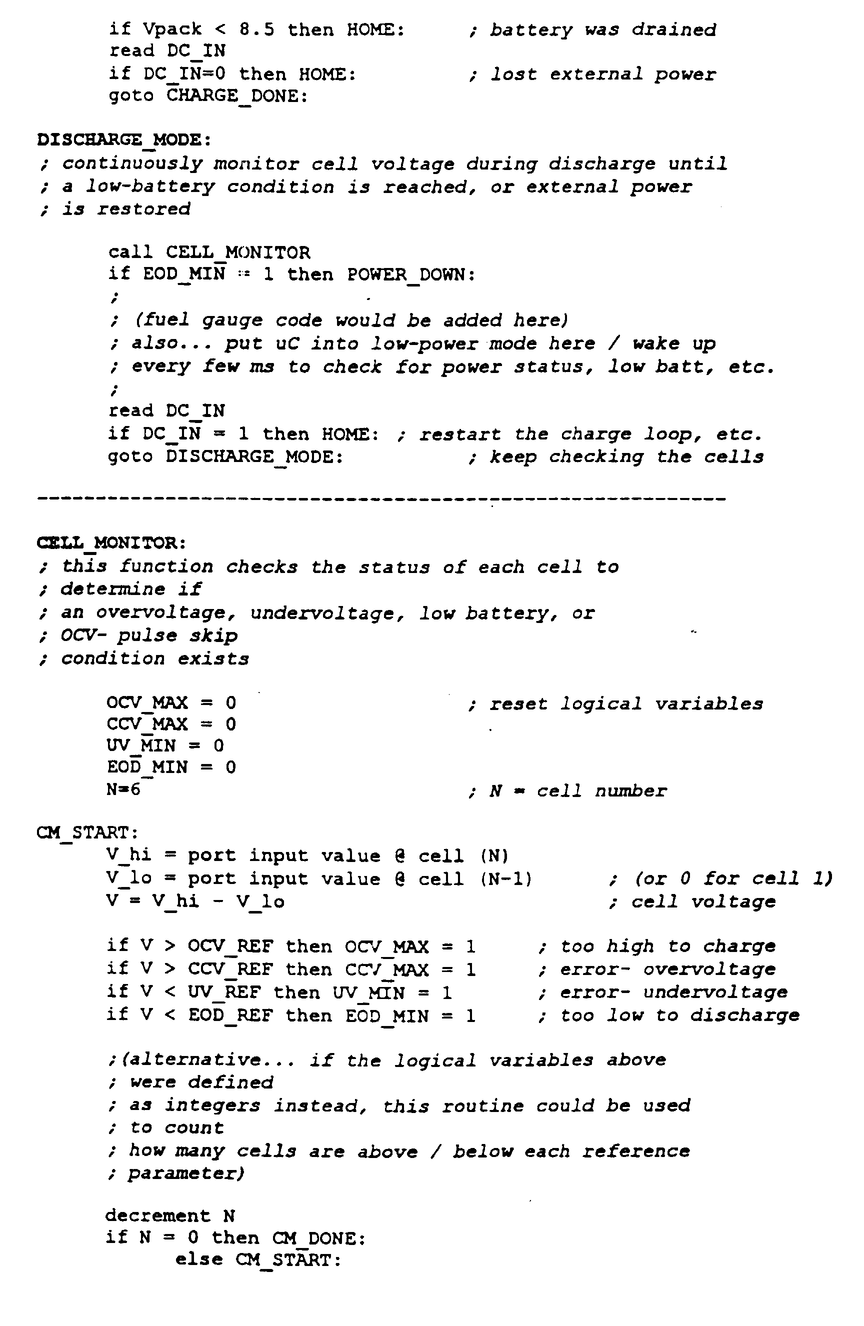

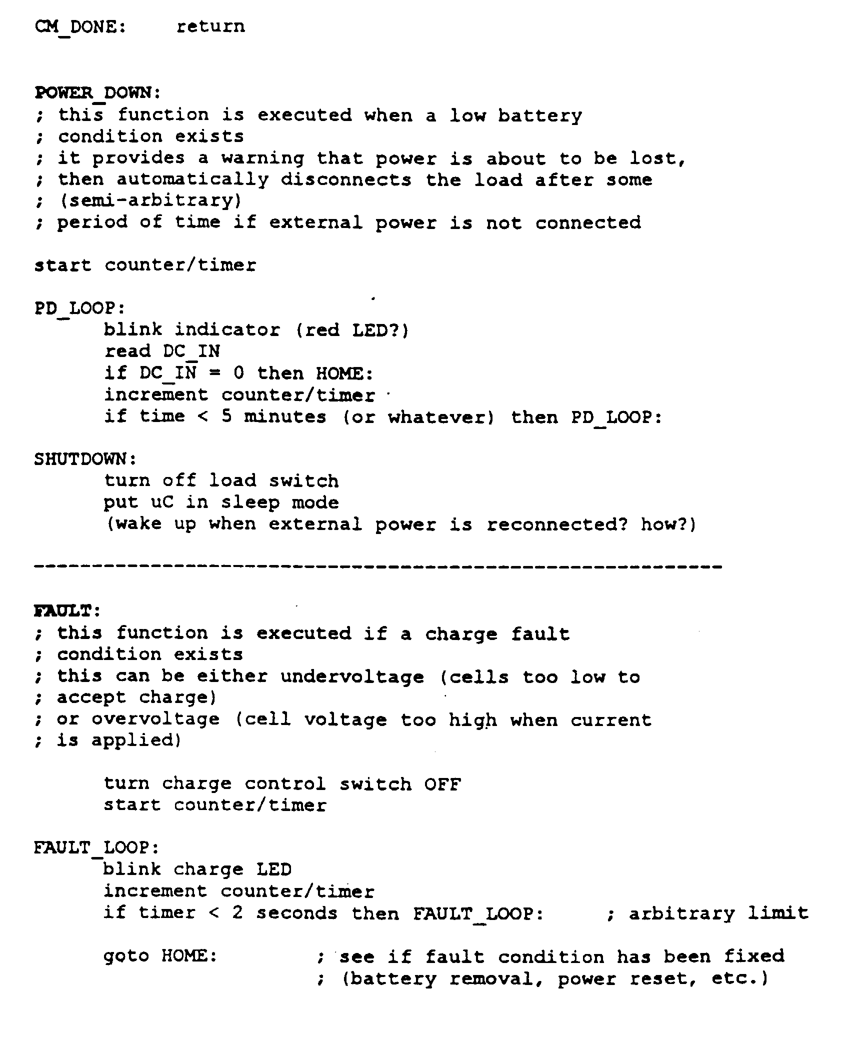

The particular embodiments of the invention shown and described in this patent relate to a battery management circuit and method for controlling the charge and discharge of series-connected rechargeable alkaline manganese dioxide electrochemical cells. Those of ordinary skill in the art will recognize immediately, however, that the present invention is not limited in scope or spirit to applications for rechargeable alkaline manganese dioxide cells only. The present invention includes within its scope battery management circuits and methods for controlling the charge and discharge of all types of electrochemical cells and batteries. For example, the invention may be used in any circuit or battery charging system that utilizes a voltage-controlled, pulse modulated method of charging, secondary battery charging systems for rechargeable lithium ion or rechargeable lithium batteries, or battery "fuel gauging" systems.

Additionally, the present invention is not intended to be limited in scope to circuits and methods where only individual cell voltages are monitored, or to circuits having discrete component implementations. For example, the present invention includes within its scope circuits and methods where the CCV or OCV across two series-connected cells is monitored to determine when to terminate discharging, and when to initiate charging, even though such an alternative circuit topology might result in a less effective or efficient circuit and method. The present invention also includes within its scope integrated circuits, including application specific integrated circuits (ASICs), that implement the invention described herein.

Although only a few exemplary embodiments of this invention have been described in detail above, those skilled in the art will readily appreciate that many modifications are possible in the exemplary embodiments without materially departing from the novel teachings and advantages of the invention. Accordingly, all such modifications are intended to be included within the scope of this invention as defined in the following claims. In the claims, means-plus function clauses are intended to cover the structures described herein as performing the recited function and not only structural equivalents, but also equivalent structures. Thus, although a nail and a screw may not be structural equivalents in that a nail employs a cylindrical surface to secure wooden parts together, and whereas a screw employs a helical surface, in the environment of fastening wooden parts a nail and a screw may be equivalent structures.

## Claims

1. A method of managing the in-circuit charge and discharge of at least two series-connected rechargeable electrochemical cells, each cell having positive and negative terminals, comprising the steps of:
(a) providing charging current to the cells from a power source;
(b) sensing the voltage of each cell during charge;
(c) comparing the voltage of each cell to a first predetermined reference voltage;
(d) disabling the provision of charging current from the power source to the cells when the voltage of any cell exceeds the first predetermined reference voltage;
(e) providing discharging current from the cells to a load;
(f) sensing the voltage of each cell during discharge;
(g) comparing the voltage of each cell to a second predetermined reference voltage; and
(h) disabling the provision of discharging current from cells to the load when the voltage of any cell becomes less than the second predetermined voltage.

2. The method of Claim 1, wherein the step of sensing the voltage of each cell during charge further includes the step of sensing the open circuit voltage of each cell and wherein the step of sensing the voltage of each cell during discharge further includes the step of sensing the closed circuit voltage of each cell.

3. The method of Claim 1, wherein the charging step further includes the step of providing charging pulses to the cells at a predetermined frequency and duty cycle.

4. The method of Claim 1, wherein the charging step further includes the step of providing charging current to the cells substantially uninterruptedly and continuously.

5. A battery management circuit for controlling the in-circuit charge and discharge of at least two series-connected rechargeable electrochemical cells, each cell having positive and negative terminals, comprising:
(a) means for providing charging current to the cells from a power source;
(b) means for sensing the voltage of each cell during charge;
(c) means for comparing the voltage of each cell during charge to a first predetermined reference voltage, the voltage comparing means receiving, as input signals, voltages corresponding to the voltage of each cell during charge from the voltage sensing means and providing as an output signal a first control voltage;
(d) means for disabling the provision of charging current from the power source to the cells during charge when the voltage of any cell exceeds the first predetermined reference voltage, the means for disabling the provision of charging current receiving, as an input signal, the first control voltage;
(e) means for providing discharging current from the cells to a load;
(f) means for sensing the voltage of each cell during discharge;
(g) means for comparing the voltage of each cell during discharge to a second predetermined reference voltage, the voltage comparing means receiving, as input signals, voltages corresponding to the voltage of each cell during discharge from the voltage sensing means and providing as an output signal a second control voltage, and
(h) means for disabling the provision of discharging current from cells to the load when the voltage of any cell during discharge becomes less than the second predetermined voltage, the means for disabling the provision of discharging current receiving, as an input signal, the second control voltage.

6. The circuit of Claim 5, wherein the voltage of each cell during charge is the open circuit voltage of each cell and wherein the voltage of each cell during discharge is the closed circuit voltage.

7. The circuit of Claim 5, wherein the circuit further comprises a means for oscillating that provides an output clock signal, the output clock signal driving the means for providing charging current at a selected frequency and duty cycle.

8. The circuit of Claim 5, wherein the means for providing charging current delivers charging current from the power source to the cell substantially continuously and uninterruptedly until the first output voltage exceeds the first predetermined voltage.

9. The circuit of Claim 5, wherein each means for sensing the voltage of each cell during charge comprises an operational amplifier having a negative feedback loop comprising a resistor and a capacitor in parallel.

10. The circuit of Claim 5 including a circuit selected from the group consisting of a voltage divider network, a voltage reference generator, and a zener diode connected to the power source to provide the first predetermined reference voltage.

11. The circuit of Claim 5, including a circuit selected from the group consisting of a voltage divider network, a voltage reference generator, and a zener diode connected to the power source to provide the second predetermined reference voltage.

12. The circuit of Claim 5, wherein a software controlled programmable device comprises the means for sensing the voltage of each cell during charge, the means for sensing the voltage of each cell during discharge, the means for comparing the voltage of each cell during charge, and the means for comparing the voltage of each cell during discharge, the software controlled programmable device storing first and second predetermined digital values corresponding, respectively, to the first predetermined voltage and the second predetermined voltage, the software controlled programmable device comparing the first predetermined value to digital values corresponding to the open circuit voltage of each cell during charge and terminating charging of the cells when any open circuit voltage digital value exceeds the first predetermined value, and comparing the second predetermined value to closed circuit voltage digital values corresponding to the closed circuit voltage of each cell during discharge and terminating discharge of the cells when any closed circuit voltage digital value becomes less than the second predetermined value.
